# EUROPÄISCHE PATENTSCHRIFT

(11) **EP 2 066 742 B1**
(45) Veröffentlichungstag und Bekanntmachung des Hinweises auf die Patenterteilung: **01.06.2011**
(21) Anmeldenummer: 07820550.7
(22) Anmeldetag: 25.09.2007
(51) Int. Cl.: C08K 3/36, C09D 11/02, C09D 111/02

(54) **WÄSSRIGE SILICIUMDIOXID DISPERSIONEN FÜR KLEBSTOFFFORMULIERUNGEN**
AQUEOUS SILICON DIOXIDE DISPERSIONS FOR ADHESIVE FORMULATIONS
DISPERSION AQUEUSE DE DIOXYDE DE SILICIUM POUR DES FORMULATIONS DE COLLE

(30) Priorität: 26.09.2006 DE 102006045384
(43) Veröffentlichungstag der Anmeldung: 10.06.2009
(73) Patentinhaber: Akzo Nobel Chemicals International B.V., 3811 MH Amersfoort (NL)
(72) Erfinder: PANTKE, Dietrich, 40882 Ratingen (DE); MUSCH, Rüdiger, 51467 Bergisch Gladbach (DE)
(74) Vertreter: Schalkwijk, Pieter Cornelis
(86) Internationale Anmeldenummer: PCT/EP2007/060149
(87) Internationale Veröffentlichungsnummer: WO 2008/037704

(56) Entgegenhaltungen:
- EP-A- 0 624 634
- US-A1- 2003 221 778

## Beschreibung

Die Erfindung betrifft wasserenthaltende Zusammensetzungen, insbesondere wässrige Dispersionen auf Basis von Siliciumdioxid, ein Verfahren zu deren Herstellung sowie deren Verwendung als Komponente bei der Herstellung von klebenden Beschichtungen und Verbinden der einseitig oder beidseitig beschichteten Substrate durch Sprühapplikation unter Verwendung der Zusammensetzungen.

Aus dem Stand der Technik ist der Einsatz von Kieselsäure-Produkten für unterschiedliche Anwendungen bekannt, z.B. als Bindemittel, im Bereich Feingussformen, als Zusatzstoff zur Modifizierung von Oberflächen, oder im Bausektor als Additiv für Spritzbeton (vgl. z.B. Levasil® Broschüre der Fa. H.C.Starck GmbH, Goslar Deutschland, www.hcstarck.com). Weiterhin sind Mischungen von Siliciumdioxid-Dispersionen und Polychloropren-Dispersionen bekannt. Beispielsweise wird in EP-A 0 332 928 der Einsatz von Polychloropren-Latices in Gegenwart von Kieselsolen als Imprägnierschicht bei der Herstellung von Brandschutzelementen offenbart. In FR-A 2341537 und FR-A 2 210 699 werden pyrogene Kieselsäuren in Kombination mit Polychloroprenlatices zur Herstellung flammfester Schaumzurichtungen oder zur Bitumenvergütung und in der JP-A 06 256 738 in Kombination mit Chloropren-Acrylsäure-Copolymeren beschrieben. Darüber hinaus ist der Einsatz von Siliciumdioxid-Dispersionen in wässrigen Klebstoffsystemen bekannt (Ganster et al., Neue Rohstoffe für lösemittelfreie Kleb- und Dichtstoffein, Zeitschrift "Kleben und Dichten", 3/2003).

Die Herstellung von Klebstoff-Formulierungen auf Basis von Polychloropren-Dispersionen unter Verwendung von Kieselsolen wird in WO-A 03/102066 beschrieben. Diese Formulierungen besitzen zwar eine lange "offene Zeit" und eine hohe "Wärmebeständigkeit" der resultierenden trockenen Klebstoff-Filme, sie sind aufgrund der hohen Viskosität jedoch nicht geeignet, im Sprühverfahren verarbeitet zu werden.

Bei Klebstoffen versteht man unter der "offenen Zeit" nach DIN 16920 die Zeitspanne nach dem Klebstoffauftrag, innerhalb der ein Nasskleben möglich ist. Dies ist die Zeit vom Auftrag des Klebstoffs bis zum Einsetzen des Pressdrucks.

Unter der "Wärmebeständigkeit" versteht man die Temperatur bei der eine Klebschicht unter Belastung die verklebten Fügeteile noch zusammenhält.

Versprühbare Kontaktkleber auf der Basis von Polychloropren-Dispersionen werden in verschiedenen Bereichen eingesetzt, besonders zur Schaumverklebung im Matratzen- und Möbelsektor. Hier haben sich im Wesentlichen zwei Verfahren etabliert:

### 1. Das 2K(omponenten)-Verfahren

Hierbei werden mit einer Spritzpistole, die 2 Düsen besitzt, Klebstoff-Formulierung und wässriges Koagulationsmittel gleichzeitig verdüst. Im Sprühstrahl treffen sich beide Mischungen und koagulieren dort und/oder auf der Substratoberfläche. Beschrieben wird dies z.B. in : Katsuyuki Hara, Institute of Technology, Osaka Japan, "Two part spray mixing water borne adhesive" World adhesive congress, München 8 - 10 Juni 1988, oder in der Technischen Information der Bayer Material Science AG, Leverkusen, Deutschland (KA-KR-0001e/01/05.96.) Dieses Verfahren ist jedoch störanfällig, und schwer zu handhaben, da beide Komponenten konstant in einem bestimmten Mischungsverhalten verdüst werden müssen und wird vom Markt nur bedingt akzeptiert.

### 2. Das 1K(omponenten)-Verfahren

Hierbei wird eine Klebstoff-Formulierung mit einer begrenzten Scherstabilität durch eine Spritzpistole mit einer Düse versprüht. Entsprechende wässrige Formulierungen enthalten zur Destabilisierung der Klebstoff-Dispersion organische Lösemittel, wie z.B. beschrieben in EP 814 139 A1 oder DE 30 28 693 A1. Aufgrund von strikten Umweltvorschriften ist der Einsatz von lösemittelhaltigen 1K- Formulierungen nur unter strengen Auflagen erlaubt. Es besteht daher ein Bedarf an lösemittelfreien Klebstoff-Formulierungen.

In EP-A 624 634 A1 und EP-A 470 928 werden solche lösemittelfreien wässrigen 1K-Formulierungen zum elastischen Verkleben von Substratflächen beschrieben. Sie enthalten Mischungen aus Acrylsäureestercopolymeren und Polychloropren. Durch Zugabe von schwachen Säuren wie Borsäure und anderen Hilfsstoffen wird der pH Wert auf ca. 8,5 eingestellt. Diese drucksensiblen Dispersionen koagulieren beim Austritt aus der Düse der Spritzpistole. Nachteilig ist hier die geringe Wärmebeständigkeit der Formulierungen, so dass sie lediglich bei "Schaum-Schaum-Verklebungen" zum Einsatz kommen.

Beschichtungen bzw. Verklebungen mit hoher Wärmebeständigkeit erhält man durch das sogenannte "EPI System" (Emulsion-Polymer-Isocyanat). Erreicht wird dies durch Zusatz von ca. 15 % Isocyanat - meist MDI (Diphenylmethan- 4, 4' - Diisocyanat) - zur Polymer-Dispersion. Aufgrund der sehr kurzen "Topfzeit" von einigen Stunden ist hier nur eine kurzfristige Verarbeitung der 2K Formulierung möglich. Unter der "Topfzeit" versteht man die Zeit, in der man die Formulierung nach dem Einmischen mindestens einer weiteren Dispersion verarbeiten kann.

Gemäß dem Stand der Technik gibt es auch latent reaktive Polyisocyanat-Dispersionen, die in polychloroprenhaltigen 1K-Klebstoff-Formulierungen unter bestimmten Bedingungen über Wochen stabil bleiben. Entsprechende Produkte werden von Bayer Material Science AG, Leverkusen unter der Bezeichnung Dispercoll^{®} BL XP 2514 und Desmodur^{®} Z XP 2589 hergestellt. Hier ist jedoch zu berücksichtigen, dass die höhere Wärmebeständigkeit der Klebenaht erst eintritt, wenn die zu verklebenden Substrate vor oder nach dem Fügen erwärmt werden. 1K-Formulierungen, die bei Raumtemperatur verklebt werden und ohne Erwärmung eine hohe Wärmebeständigkeit erreichen sind auf diese Weise nicht erreichbar.

Polychloropren-Dispersionen liegen nach der Emulsionspolymerisation als stark alkalische Dispersionen im pH-Bereich von 12 bis 13 vor und weisen einen Feststoffgehalt von ca. 30 bis 40 Gew.-% auf. Für eine Aufarbeitung zum Festkautschuk ist es in der Regel erforderlich, den pH-Wert in den Bereich von pH 6 bis 7 abzusenken. Dies geschieht üblicherweise durch Zugabe entsprechender Mengen verdünnter Essigsäure, Mineralsäuren würden dagegen eine sofortige Koagulation hervorrufen. Literatur: "Ullmanns Encyclopädie der technischen Chemie", Band 9, S. 366, Verlag Urban und Schwarzenberg, München-Berlin 1957; "Encyclopedia of Polymer Science and Technology", Vol. 3, S. 705-730, John Wiley, New York 1965; "Methoden der Organischen Chemie" (Houben-Weyl) XIV/1, 738 f. Georg Thieme Verlag Stuttgart 1961.

Sollen Dispersionen als Klebrohstoff verwendet werden müssen sie durch eine nachgeschaltete Aufrahmung auf Feststoffgehalte von 54 Gew.-% bis 60 Gew.-% angehoben werden. Auch in diesem Stadium besitzen sie üblicherweise einen pH-Wert > 12. Wässrige Polychloropren-Klebstoffformulierungen, die im Bereich der 1K-Spritzklebstoffe eingesetzt werden, müssen einen pH-Wert < 10 haben, um das Eigenschaftsprofil zu erreichen. Eine Absenkung des pH-Wertes mit Essigsäure gelingt aufgrund des hohen Feststoffgehaltes nicht mehr. Lediglich schwache Säuren wie z.B. Glycin (Aminoessigsäure) lassen sich verwenden. Auf diese Weise wird die Klebstoffformulierung in einem unerwünschten Maße verdünnt

Es bestand somit weiterhin Bedarf an wässrigen 1K-Klebstoff-Formulierungen, die die beschriebenen Nachteile nicht aufweisen, d.h. insbesondere an Formulierungen, die sich zum Versprühen eignen und unmittelbar nach dem Versprühen eine hohe Anfangsfestigkeit zeigen, eine lange Topfzeit besitzen und Verklebungen mit hohem Wärmestand erzeugen.

Die Aufgabe, die der vorliegenden Erfindung zugrunde lag, bestand demnach darin, solche 1K-Klebstoff-Formulierungen bereitzustellen.

Überraschend wurde gefunden, dass Siliciumdioxid-Dispersionen, die mit starken oder mittelstarken Säuren auf niedrige pH-Werte eingestellt wurden, sich ohne Koagulation mit stark basischen Polychloropren-Dispersionen mischen lassen. Auf diese Weise lassen sich 1K-Formulierungen mit hohem Feststoffgehalt und niedrigem pH-Wert herstellen.

Dies ist umso überraschender, da sich der pH-Wert einer Formulierung, die erhalten wurde, indem zuerst eine Mischung aus Siliciumdioxid- und Polychloropren-Dispersion hergestellt wurde, ohne spontane Koagulation nicht mehr durch Zugabe starker oder mittelstarker Säuren absenken lässt.

Gegenstand der vorliegenden Erfindung ist somit ein Verfahren zur Herstellung von Dispersionen, dadurch gekennzeichnet, dass
(a) mindestens eine wässrige Siliciumdioxid-Dispersion mit einem mittleren Partikeldurchmesser der SiO₂-Partikel von 1 bis 200 nm durch Zugabe von wenigstens einer starken oder mittelstarken Säure auf einen pH-Wert von 6 oder kleiner gebracht wird und
(b) anschließend mit wenigstens einer Polychloropren-Dispersion mit einer mittleren Partikelgröße der Polychloroprenpartikel von 50 bis 200 nm gemischt wird.

Starke Säuren im Rahmen der Erfindung sind bevorzugt solche solche, deren pK_{A}-Wert kleiner oder gleich 0 ist. Mittelstarke Säuren im Rahmen der Erfindung sind solche, deren pK_{A}-Wert zwischen 0 und 4 liegt. Von Säuren lassen sich die Gleichgewichtskonstanten für die Protonenabspaltung in wässriger Lösung bestimmen. Solche Werte sind dem Fachmann auch in Tabellen zugänglich. Angegeben wird die Aciditätskonstante pK_{A}. Bei starken Säuren liegt der pK_{A} Wert inder Regel bei kleiner oder gleich 0 , bei mittelstarken Säuren bei pK_{A} zwischen 0 und 4, schwache Säuren unterscheiden sich von diesen darin, dass sie üblicherweise einen pK_{A} Wert von größer 4 aufweisen. (www.cci.ethz.ch/vorlesung/de/all/node7.html). Bevorzugt wird der pH-Wert der Siliciumdioxid-Dispersion im erfindungsgemäßen Verfahren durch Zugabe von Säuren eingestellt deren pK_{A} Wert < 4 ist, besonders bevorzugt < 2,5 ist.

Bevorzugte starke oder mittelstarke Säuren im Rahmen der vorliegenden Erfindung sind säuregruppenhaltige Ionenaustauscher oder Mineralsäuren, wie beispielsweise Salzsäure, Schwefelsäure oder Phosphorsäuren, wie z.B. ortho-Phosphorsäure. Ganz besonders bevorzugt ist Ortho-Phosphorsäure. Besonders bevorzugt wird der pH-Wert der Siliziumdioxid-Dispersion durch den Säurezusatz auf einen pH-Wert von 1 bis 5 erniedrigt, ganz besonders bevorzugt von 1,7 bis 4.

Die Zugabe der Säure erfolgt vorzugsweise unter Rühren. Die Zugabe der Säure erfolgt vorzugsweise portionsweise, besonders bevorzugt tropfenweise. Nach vollständiger Zugabe der entsprechenden Menge Säure kann ein Nachführen der Dispersion vorteilhaft sein. Dieses Nachrühren kann beispielsweise für einen Zeitraum von wenigen Minuten bis zu mehreren Stunden, vorzugsweise für 1 min bis 2 h erfolgen. Die Zugabe der Säure kann bei beliebigen Temperaturen erfolgen, bei denen die Siliziumdioxid-Dispersionen stabil sind. Bevorzugt erfolgt die Zugabe der Säuren bei Raumtemperatur.

Unter dem Begriff "wässrig" ist im Rahmen der Erfindung zu verstehen, dass die Dispersionen im Wesentlichen, d.h. zu mindestens 30 Gew.-% - bezogen auf das Gesamtgewicht der Dispersion - Wasser enthalten.

Wässrige Siliciumdioxid-Dispersionen sind bekannt und liegen je nach Herstellprozess in unterschiedlichen Formen vor.

Erfindungsgemäß geeignete Siliciumdioxid-Dispersionen können auf Basis von Kieselsol, Kieselgel, pyrogenen Kieselsäuren, Fällungskieselsäuren oder Mischungen der genannten erhalten werden.

Kieselsäuresole sind kolloidale Lösungen von amorphem Siliciumdioxid in Wasser, die auch als Siliciumdioxidsole meist aber kurz als Kieselsole bezeichnet werden. Das Siliciumdioxid liegt dabei in Form von kugelförmigen und an der Oberfläche hydroxilierten Partikeln vor. Der Partikeldurchmesser der Kolloidteilchen beträgt in der Regel 1 bis 200 nm, wobei die zur Teilchengröße korrelierende spezifische BET-Oberfläche (bestimmt nach der Methode von G.N. Sears, Analytical Chemistry Vol. 28, N. 12, 1981-1983, Dezember 1956) bei 15 bis 2000 m²/g liegt. Unter der Annahme, dass Kieselsole als kugelförmige Primärpartikel vorliegen und eine Dichte von 2,2 g/cm³ haben, ergibt sich ein Faktor von 2750. Dieser Faktor dividiert durch die spezifische Oberfläche ergibt die Teilchengröße in nm. (Zur Ermittlung des Faktors siehe Ralph K. Iler, The Chemistry of Silica, John Wiley & Sons New York 1979 S. 465 f.). Die Oberfläche der SiO₂-Teilchen weist eine Ladung auf, die durch ein entsprechendes Gegenion ausgeglichen wird, das zur Stabilisierung der kolloidalen Lösung führt. Die alkalisch stabilisierten Kieselsole besitzen einen pH-Wert von 7 bis 11,5 und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Kieselsole können auch als semistabile kolloidale Lösungen schwach sauer vorliegen. Ferner ist es möglich, durch Beschichtung der Oberfläche mit Al₂(OH)₅Cl kationisch eingestellte Kieselsole herzustellen. Die Feststoff-Konzentrationen der Kieselsole liegen bevorzugt bei 5 bis 60 Gew.-% SiO₂.

Der Herstellprozess für Kieselsole durchläuft im wesentlichen die Produktionsschritte Entalkalisierung von Wasserglas mittels Ionenaustausch, Einstellung und Stabilisierung der jeweils gewünschten Teilchengrößen(verteilung) der SiO₂-Partikel, Einstellung der jeweils gewünschten SiO₂-Konzentration und gegebenenfalls einer Oberflächenmodifikation der SiO₂-Partikel, wie beispielsweise mit Al₂(OH)₅Cl. In keinem dieser Schritte verlassen die SiO₂-Partikel den kolloidal gelösten Zustand. Dadurch erklärt sich das Vorliegen der diskreten Primärpartikel.

Des Weiteren wird zwischen pyrogener Kieselsäure und Fällungskieselsäure unterschieden. Beim Fällungsverfahren wird Wasser vorgelegt und anschließend Wasserglas und Säure, wie H₂SO₄, simultan zugegeben. Dabei entstehen kolloidale Primärteilchen, die mit fortschreitender Reaktion agglomerieren und zu Agglomeraten verwachsen. Die spezifische Oberfläche liegt in der Regel bei 30 bis 800 m²/g (Meßvorschrift: DIN 66131) und die Primärpartikelgröße bei 5 bis 100 nm. Die Primärpartikel von diesen als Feststoff vorliegenden Kieselsäuren sind in der Regel zu Sekundäragglomeraten fest vernetzt. Angegeben wird die mittlere Partikelgröße - auch als mittlere Teilchengröße bezeichnet.

Pyrogene Kieselsäure kann durch Flammenhydrolyse oder mit Hilfe des Lichtbogenverfahrens hergestellt werden. Das dominierende Syntheseverfahren für pyrogene Kieselsäuren ist die Flammenhydrolyse, bei der Tetrachlorsilan in einer Knallgasflamme zersetzt wird. Die dabei gebildete Kieselsäure ist röntgenamorph. Pyrogene Kieselsäuren besitzen an ihrer nahezu porenfreien Oberfläche deutlich weniger OH-Gruppen als Fällungskieselsäure. Die über Flammhydrolyse hergestellte pyrogenen Kieselsäure hat in der Regel eine spezifische Oberfläche von 50 bis 600 m²/g (DIN 66131) und eine Primärpartikelgröße von 5 bis 50 nm, die über das Lichtbogenverfahren hergestellte Kieselsäure eine spezifischen Oberfläche von 25 bis 300 m²/g (DIN 66131) und eine Primärpartikelgröße von 5 bis 500 nm. Auch hier werden die Primärpartikel von diesen als Feststoff vorliegenden Kieselsäuren in der Regel zu Sekundäragglomeraten fest versetzt. Angegeben wird die mittlere Teilchengröße

Weitere Angaben zu Synthese und Eigenschaften von Kieselsäuren in fester Form sind beispielsweise K.H. Büchel, H.-H. Moretto, P. Woditsch "Industrielle Anorganische Chemie", Wiley VCH Verlag 1999, Kap. 5.8 zu entnehmen.

Werden für die erfindungsgemäße Polymer-Dispersion ein als isolierter Feststoff vorliegender SiO₂-Rohstoff, wie beispielsweise pyrogene oder gefällte Kieselsäure, eingesetzt, so wird dieser in eine wässrige SiO₂-Dispersion durch Dispergieren überführt.

Zur Herstellung der Siliciumdioxid-Dispersionen werden Dispergatoren des Standes der Technik eingesetzt, bevorzugt solche, die zur Erzeugung hoher Scherraten geeignet sind, wie z.B. Ultratorrax oder Dissolverscheiben

Bevorzugt werden solche wässrigen Siliciumdioxid-Dispersionen in den Verfahrensschritt (a) eingesetzt, deren SiO₂-Partikel eine mittlere Partikelgröße von 1 bis 200 nm, bevorzugt 5 bis 100 nm und besonders bevorzugt 8 bis 60 nm aufweisen. Für den Fall das gefällte Kieselsäuren eingesetzt werden, werden diese zwecks Teilchenverkleinerung gemahlen. Bei Siliciumdioxid-Dispersionen deren mittlere Partikelgröße oberhalb von 200 nm sind, besteht der Nachteil, dass sich die Partikel in den resultierenden Klebstoffformulierungen bei der Lagerung absetzen und bei Sprühanwendung die Düsen der Sprühpistole verstopfen können.

Bei Fällungskieselsäuren und pyrogenen Kieselsäuren können die Partikel sowohl als sogenannte Primärpartikel als auch in der Form von Agglomeraten vorliegen. Der Ausdruck "mittlere Partikelgröße" bedeutet erfindungsgemäß die mittels Ultrazentrifugation bestimmte mittlere Partikelgröße und schließt die Größe von Primärpartikeln und gegebenenfalls vorhandenen Agglomeraten daraus ein (vgl.: H.G. Müller, Progr. Colloid Polym. Sci. 107, 180-188 (1997)). Es wird das Massenmittel angegeben).

In bevorzugten Ausführungsformen des erfindungsgemäßen Verfahrens werden solche Siliciumdioxid-Dispersionen eingesetzt, in denen die SiO₂-Partikel der Siliciumdioxid-Dispersion als diskrete unvernetzte Primärpartikel vorliegen. Solche Siliziumdioxid-Dispersionen enthaltend diskrete unvernetzte Primärpartikel sind insbesondere Kieselsole.

Es ist ebenfalls bevorzugt, dass die SiO₂-Partikel über Hydroxylgruppen an der Partikel-Oberfläche verfügen.

Besonders bevorzugt werden als wässrige Siliciumdioxid-Dispersionen wässrige Kieselsäuresole eingesetzt. Geeignete Kieselsäuresole sind kommerziell erhältlich.

Die Polychloroprenherstellung erfolgt durch Emulsionspolymerisation im alkalischen wäßrigen Medium, vgl. "Ullmanns Encyclopädie der technischen Chemie", Band 9, S. 366, Verlag Urban und Schwarzenberg, München-Berlin 1957; "Encyclopedia of Polymer Science and Technology", Vol. 3, S. 705-730, John Wiley, New York 1965; "Methoden der Organischen Chemie" (Houben-Weyl) XIV/1, 738 f. Georg Thieme Verlag Stuttgart 1961.

Erfindungsgemäß werden Polychloropren-Dispersionen eingesetzt, die durch Polymerisation von Chloropren und 0 bis 20 Gew.-Teilen eines mit Chloropren copolymerisierbaren, ethylenisch ungesättigten Monomeren in alkalischem Medium erhältlich sind.

Geeignete copolymerisierbare Monomere werden z. B. beschrieben in "Methoden der Organischen Chemie" (Houben-Weyl) XIV/I, 738 f. Georg Thieme Verlag Stuttgart 1961. Bevorzugt sind Verbindungen mit 3 bis 12 C-Atomen und 1 oder 2 copolymerisierbaren C=C-Doppelbindungen pro Molekül. Beispiele bevorzugter copolymerisierbarer Monomere sind 2,3-Dichlorbutadien und 1-Chlorbutadien.

Die erfindungsgemäß einzusetzende Polychloropren-Dispersionen werden durch Emulsionspolymerisation bei 0 bis 70°C, vorzugsweise bei 5 bis 45 °C und pH-Werten von 10 bis 14, vorzugsweise von 11 bis 13 hergestellt. Die Aktivierung erfolgt durch die üblichen, dem Fachmann bekannten Aktivatoren bzw. Aktivatorsysteme.

Vorzugsweise weisen die Partikel der Polychloropren-Dispersion einen mittleren Partikeldurchumessser von 60 bis 180 nm auf.

Die Herstellung der erfindungsgemäßen Polychloroprene kann sowohl kontinuierlich als auch diskontinuierlich erfolgen, wobei die kontinuierliche Polymerisation bevorzugt ist

Zur Viskositätseinstellung der erfindungsgemäßen Polychloroprene können übliche Kettenübernagungsmittel wie Mercaptane, wie sie z.B. in DE-A 3 002 711, GB-A 1 048 235, FR-A 2 073 106 beschrieben sind, oder wie Xanthogendisulfide, wie sie z.B. in DE-A 1 186 215, DE-A 2 256 453, DE-A 2 306 610 und DE-A 3 044 811, in EP-A 0 053 319, GB-A 512 458, GB-A 952 156 und US-A 2 321 693 und US-A 2 567 117 beschrieben sind, verwendet werden.

Die Polymerisation wird üblicherweise bei 50% bis 95%, bevorzugt bei 60% bis 80% des Monomerumsatzes abgebrochen, wobei man als Inhibitor z.B. Phenothiazin, tert-Butylbrenzcatechin oder Diethylhydroxylamin zugeben kann.

Nach der Polymerisation wird das restliche Chloropren-Monomer durch eine Wasserdampfdestillation entfernt. Sie wird durchgeführt wie z.B beschrieben in "W.Obrecht in Houben-Weyl: Methoden der organischen Chemie Bd. 20 Teil 3 Makromolekulare Stoffe, (1987) S. 852".

In einem weiteren Schritt wird der Feststoffgehalt der Dispersion durch einen Aufrahmprozess erhöht. Diese Aufrahmung erfolgt z.B. durch Zusatz von Alginaten, wie in "Neoprene Latices, John C. Carl, E.I. Du Pont 1964, S.13" beschrieben.

Solche für den Einsatz im Klebstoffsektor geeigneten Polychloropren-Dispersionen werden z.B. von der Firma Bayer Material Science AG, Leverkusen unter der Bezeichnung Dispercoll^{®} C 84 und Dispercoll^{®} C 74 angeboten.

Besonders bevorzugt ist der Einsatz von wässrigen Polychloropren-Dispersionen, die sich durch eine lange Lagerbeständigkeit auszeichnen, d.h. deren pH-Wert sich während der Lagerzeit nicht signifikant ändern.

Die Herstellung lagerstabilen Polychloropren-Dispersionen wird beschrieben in LeA 36711, Entsprechende für den Klebstoffsektor geeignete Polychloropren Dispersionen werden z.B. von der Firma Bayer Material Science AG, Leverkusen unter der Bezeichnung Dispereoll^{®} C VPLS 2325 und Dispercoll^{®} C VPLS 2372H angeboten

In bevorzugten Ausführungsformen der vorliegenden Erfindung enthalten die erfindungsgemäß hergestellten Dispersionen weiterhin
(c) wenigstens eine wasserlösliche OH-gruppenhaltige organische Verbindung.

Eine solche wasserlösliche OH-gruppenhaltiges organische Verbindung kann entweder den fertigen Mischungen hergestellt aus Zugabe der Polychloropren-Dispersion(en) zu der angesäuerten Siliziumdioxid-Dispersion zugesetzt werden, oder aber vor der Zugabe der Polychloropren-Dispersion(en) zu der angesäuerten Siliziumdioxid-Dispersion mit einer der beiden Dispersionen, Polychloropren-Dispersion oder angesäuerter Siliziumdioxid-Dispersion, und mit dieser vermischt werden. Die wasserlösliche OH-gruppenhaltiges organische Verbindung kann in fester Form oder in Form einer wässrigen Lösung zugegeben werden. Auch diese Zugabe erfolgt vorzugsweise unter Rühren. Wenn es sich bei der wasserlöslichen OH-gruppenhaltigen organischen Verbindung um Cyclodextrin handelt, ist darauf zu achten, dass der pH-Wert der angesäuerten Siliciumdioxid-Dispersion größer als 3,5 ist.

Unter wasserlöslichen Hydroxylgruppenhaltigen organischen Verbindungen sind im Rahmen der Erfindung alle linearen oder cyclischen Oligomere oder Polymere zu verstehen, die in der Oligomer- oder Polymerkette Hydroxylgruppen enthalten und wasserlöslich sind. Unter Oligomeren sind im Rahmen der Erfindung solche Verbindungen mit bis zu 10 Wiederholungseinheiten und einem Molekulargewicht unter 1000 zu verstehen, unter Polymeren solche mit mehr als 10 Wiederholungseinheiten und/oder und einem Molekulargewicht über 1000 zu verstehen, wobei in beiden Fällen die Wiederholungseinheiten gleich oder verschieden sein können. Bevorzugte Beispiele für OH-gruppenhaltige Polymere sind Hydroxylalkylcellulosen, Polyvinylalkohole oder polymere Cyclodextrine, bevorzugte Beispiele für OH-gruppenhaltige Oligomere sind Cycodextrine. Bevorzugte OH-gruppenhaltige Oligomere oder Polymere sind im Rahmen der Erfindung Cycodextrine.

Geeignete Cyclodextrine sind unsubstituierte und substituierte Cyclodextrine.

Bevorzugte Cyclodextrine sind ά-, β- und γ-Cyclodextrine und deren Ester-, Alkylether-, Hydroxyalkylether-, Alkoxycarbonylalkylether-, Carboxyalkylether-Derivate oder deren Salze.

Besonders bevorzugt sind Methyl-ά-cyclodextrin, Methyl-β-cyclodextrin, Methyl-γ-cyclodextrin, Ethyl-β-cyclodextrin, Butyl-ά-cyclodextrin, Butyl-β-cyclodextrin, Butyl-γ-cyclodextrin, 2,6-Dimethyl-ά-cyclodextrin, 2,6-Dimethyl-β-cyclodextrin, 2,6-Dimethyl-γ-cyclodextrin, 2,6-Diethyl-β-cyclodextrin, 2,6-Dibuiyl-β-cyclodextrin, 2,3,6-Trimethyl-ά-cyelodextrin, 2,3,6-Trimethyl-β-cyclodextrin, 2,3,6-Trimethyl-γ-cyclodextrin, 2,3,6-Trioctyl-ά-cyclodextrin, 2,3,6-Trioctyl-β-cyclodextrin, 2,3,6-Triacetyl-ά-cyclodextrin, 2,3,6-Triacetyl-β-cyclodextrin, 2,3,6-Triacetyl-γ-cyclodextrin, (2-Hydroxy)propyl-ά-cyclodextrin, (2-Hydroxy) propyl-β-cyclodextrin, (2-Hydroxy)propyl-γ-cyclodextrin, teilweise oder vollständig acetyliertes, methyliertes und succinyliertes ά-, β- und y-Cyclodextrin, 2,6-Dimethyl-3-acetyl-β-cyclodextrin und 2,6-Dibutyl-3-acetyl-β-cyclodextrin.

Die Mono-, Di- oder Triether-substituierten, Mono-, Di- oder Triester-substituierten oder Monoester/-diether substituierten Derivate werden in der Regel durch Veretherung von ά-, β- und γ-Cyclodextrinen mit Alkylierungsmitteln wie beispielsweise Dimethylsulfat oder Alkylhalogeniden mit 1 bis 30 C-Atomen wie beispielsweise Methyl-, Ethyl-, Propyl-, Butyl-, Pentyl-, Hexyl-, Heptyl-, Octylchlorid, -bromid oder -iodid und/oder Veresterung mit Essigsäure oder Bernsteinsäure in Gegenwart von Säuren erhalten.

Cyclodextrine sind ebenfalls kommerziell erhältlich, beispielsweise bei der Firma Wacker (Cavamax® und Cavasol®).

Die in das erfindungsgemäße Verfahren eingesetzten Siliciumdioxid-Dispersionen besitzen bevorzugt einen Feststoffgehalt an dispergierten Siliciumdioxid von 5 Gew.-% bis 60 Gew.-%, bevorzugt 30 Gew.-% bis 51 Gew.-%, bezogen auf das Gesamtgewicht der Siliciumdioxid-Dispersion.

Bei den nach dem erfindungsgemäßen Verfahren hergestellten Dispersionen handelt es sich um solche, die bisher auf keinem anderen Wege zugänglich waren. Demnach sind die nach dem erfindungsgemäßen Verfahren hergestellten Dispersionen ebenfalls Gegenstand der vorliegenden Erfindung.

Die nach dem erfindungsgemäßen Verfahren hergestellten Dispersionen eigen sich hervorragend als Komponenten bei der Herstellung von Sprühklebstoffen, bevorzugt von 1K-Sprühklebstofformulierungen, da die gewünschte Koagulation erst beim Versprühen auftritt und ein Verstopfen der Sprühdüsen verhindert werden kann.

Weiterer Gegenstand der vorliegenden Erfindung ist daher die Verwendung dieser erfindungsgemäß hergestellten Dispersionen als Komponente bei der Herstellung von Sprühklebstoffen, bevorzugt von 1K-Sprühklebstofformulierungen. Bevorzugt erfolgt diese Herstellung von Sprühklebstoffen unter Zusatz wenigstens einer der wasserlöslichen OH-gruppenhaltigen organischen Verbindung(en).

Bei der Verwendung der erfindungsgemäß hergestellten Dispersionen als Komponente in Klebstoffformulierungen enthalten diese Formulierungen Siliciumdioxid-Dispersionen im Bereich von 3 Gew.-% bis 45 Gew.-%, bevorzugt von 5 Gew.-%. bis 35 Gew.-%. Die Polychloropren-Dispersionen sind in den Formulierungen zu 97 Gew.-% bis 35 Gew.-% enthalten, bevorzugt zu 90 Gew.-% bis 50 Gew.-% und die Anteile der gegebenenfalls vorhandenen OH-gruppenhaltigen wasserlöslichen organischen Verbindung(en) liegen bei 0 Gew.-% bis 20 Gew.-%, bevorzugt bei 5 Gew.-% bis 15 Gew.-%., wobei sich die Prozentangaben auf das Gewicht nichtflüchtiger Anteile beziehen und zu 100 Gew.-% addieren.

Mit den erfindungsgemäß hergestellten Dispersionen können Klebstoffformulierungen erhalten werden, die eine pH-Wert von 8 bis 10, bevorzugt von 8,5 bis 9,5 aufweisen, ohne dass Koagulation beim Einstellen des pH-Wertes beobachtet wird. Sollte die angestrebte Menge an Siliciumdioxid-Dispersion in der Formulierung nicht ausreichen, um in den gewünschten pH-Bereich zu gelangen, so kann mit Glycin die restliche pH-Wert Differenz nachjustiert werden.

Die erfindungsgemäß hergestellten Klebstoffformulierungen können weitere Zusatzmittel und gegebenenfalls Beschichtungs- und Klebstoffhilfsstoffe enthalten.

Beispielsweise können weitere Polymerlatices in Mengen bis zu 20 Gew.-% zugegeben werden. Als Polymerlatices sind im Prinzip alle Dispersionen geeignet, bei denen Polymere mit Hilfe von Emulgatoren oder Dispergatoren in Wasser dispergierbar sind, oder durch Emulsionspolymerisation hergestellt wurden und als Polymerdispersion in Wasser vorliegen. Beispiele sind Latices von Polymeren aus Dienen oder olefinisch ungesättigten Monomeren und deren Copolymeren, wie Polystyrol-Butadien-Latex, Acrylnitril- Butadien-Latex, Latex von chloriertem Polyisopren oder (Meth)acrylat-Latex.

Bevorzugt sind natürliche und synthetische Polymerdispersionen, die im Klebstoffbereich eingesetzt werden, beschrieben in: Irving Skeist, Handbook of Adhesives 2. Auflage 1977, Van Nostrand Reinhold New York.

Weitere geeignete, gegebenenfalls einzusetzende Hilfsmittel sind beispielsweise in Mengen von 0,01 bis 1 Gew.-%, bezogen auf nichtflüchtige Anteile, einzusetzende organische Verdickungsmittel, wie Cellulosederivate, Alginate, Stärke, Stärkederivate, Polyurethan-Verdickungsmittel oder Polyacrylsäure oder in Mengen von 0,05 bis 5 Gew.-%, bezogen auf nichtflüchtige Anteile, einzusetzende anorganische Verdickungsmittel, wie beispielsweise Bentonite.

Zur Konservierung können den erfindungsgemäß hergestellten Dispersionen auch Fungizide zugesetzt werden. Diese kommen in Mengen von 0,02 bis 1 Gew.-%, bezogen auf nichtflüchtige Anteile, zum Einsatz. Geeignete Fungizide sind beispielsweise Phenol- und Kresolderivate oder zinnorganische Verbindungen.

Gegebenenfalls können auch klebrigmachende Harze, so genannte Klebharze, wie z.B. unmodifizierte oder modifizierte Naturharze wie Kollophoniumester, Kohlenwasserstoffharze oder synthetische Harze wie Phthalatharze der erfindungsgemäß hergestellten Dispersion in dispergierter Form zugesetzt werden (siehe z.B. in "Klebharze" R. Jordan, R Hinterwaldner, S. 75-115, Hinterwaldner Verlag München 1994). Bevorzugt sind Alkylphenolharz- und Terpenphenolharz-Dispersionen mit Erweichungspunkten größer 70 °C, besonders bevorzugt größer 110 °C.

Auch Weichmacher, wie beispielsweise solche auf Adipat-, Phthalat- oder Phosphatbasis können den erfindungsgemäß hergestellten Dispersionen in Mengen von 0,5 bis 10 Gew.-Teile, bezogen auf nichtflüchtige Anteile zugesetzt werden.

Als Akzeptor für geringe Mengen von Chlorwasserstoff, der von den Chloroprenpolymerisaten abgespalten werden kann, können Epoxide wie z.B. Ruelapox^{®} 0164 (Bisphenol-A-Epichlorhydrinharz MG≥ 700, Viskosität: 8000-13000 mPas, Lieferant: Bakelite AG, Varzinger Str. 49, 47138 Duisburg-Meiderich) eingesetzt werden.

Durch den Zusatz von Netzmitteln, beispielsweise Polyphosphaten, wie Natriumhexametaphosphat, Naphthalinsulfonsäure, Kondensationsprodukten aus Napththalinsulfonsäure und Formaldehyd, Natriumlaurylsulfat oder Ammonium- oder Natriumpolyacryl-Säuresalze lässt sich die Stabilität der Klebstofffonnulierung bei pH-Werten von kleiner 10 bei Bedarf anheben.

Zur erfindungsgemäßen Herstellung der Dispersionen werden die Mengenverhältnisse der einzelnen Komponenten so gewählt, dass die resultierende Dispersion die einzelnen Komponenten, wie Siliziumdioxid-Dispersion, Polychloropren-Dispersion sowie gegebenenfalls wasserlösliche OH-gruppenhaltige organische Verbindungen sowie gegebenenfalls weitere Zusatzmittel oder Beschichtungs- oder Klebstoffhilfsstoffe in den vorangehend angegebenen Mengen enthält.

Die einzelnen Komponenten können grundsätzlich in beliebiger Reihenfolge zusammengegeben werden.

Die erfindungsgemäßen Dispersionen eignen sich hervorragend als Klebstoffe oder Beschichtungsmittel für diverse Substrate. Beispielsweise können Substrate wie Holz, Papier, Kunststoffe, Textilien, Leder, Gummi oder aus anorganischen Materialien wie Keramik, Steingut, Glasfaser oder Zement beschichtet oder verklebt werden. Beim Verkleben von Substraten können Substrate gleicher oder verschiedener Art verklebt werden. Die erfindungsgemäßen Polymer-Dispersionen zeigen gegenüber bekannten wässrigen Polymer-Dispersionen trotz des hohen Wassergehaltes eine hohe Anfangsfestigkeit und die resultierenden trockenen Beschichtungs- oder Klebstoff-Filme eine hohe Wärmebeständigkeit.

Die Auftragung der erfindungsgemäßen Dispersionen kann auf bekannte Weisen, z.B. durch Streichen, Gießen, Rakeln, Spritzen, Walzen oder Tauchen durchgeführt werden, wobei der Spritzauftrag bevorzugt ist. Die Trocknung des Beschichtungs- bzw. Klebstofffilms kann bei Raumtemperatur oder erhöhter Temperatur erfolgen.

Ebenfalls Gegenstand der vorliegenden Erfindung sind Substrate die mit einer erfindungsgemäßen Polymer-Dispersion beschichtet oder verklebt sind.

Die folgenden Beispiele dienen der beispielhaften Erläuterung der Erfindung und sind nicht als Beschränkung aufzufassen.

### Beispiele

### 1.1. Eingesetzte Substanzen

**Tab. 1: Siliciumdioxid-Dispersionen (Kieselsole) der Firma H. C. Starck GmbH, Leverkusen Deutschland**

| **Kieselsol** | **A** | **B** | **C** | **D** |
|---|---|---|---|---|
| Bezeichnung | Levasil® 50 | Levasil® 200 E | Levasil® 200 B | Levasil® |
| Konzentration (Gew%) | 50 | 20 | 30 | 50 |
| Dichte (g/cm³) | 1,39 | 1,13 | 1,204 | 1,37 |
| pH Wert | 9 | 3,5 | 5 | 9 |
| Spezifische Oberfläche (m²/g) | 50 | 200 | 200 | 50 |
| Mittlere Partikelgröße (nm) (*) | 55 | 15 | 15 | 55 |
| pH-Wert nach Zusatz von Säure | - | 3,0 | 3,0 | 2,0 |

| | | | | |
|---|---|---|---|---|
| **(*) Mittelwerte, berechnet aus der spezifischen Oberfläche** | | | | |

**Tab. 2: Verwendetes Cyclodextrin der Firma Wacker Burghausen Deutschland als wasserlösliche OH-gruppenhaltige Verbindung**

| **Cyclodextrin** | **E** |
|---|---|
| Bezeichnung | Cavamax® W6 |
| Zusammensetzung | ά - Cyclodextrin (Cyclohexa-amylase) |
| Feststoff, Gehalt an Cyclodextrin (%) | 90 |
| CAS-Nr | 10016-20-3 |
| Molekulargewicht | 973 |
| Löslichkeit in Wasser (g) (in 100 ml bei 25 °C) | 14,5 |

**Tab. 3: Polymer-Dispersionen**

| **Polymer -Dispersion** | **F** | **G** | **H** |
|---|---|---|---|
| Handelsname | Dispercoll® C 2325 | Acronal® A 310S | Simalfa® 309 |
| Chemische Zusammensetzung | Poly-2-chlorbutadien-(1,3)-mit starker Kristallisationsneigung | Acrylsäureester copolymer | Klebstoff-Formulierung auf Basis Polychloropren Dispersion und Acrylsäureester |
| Produzent | Bayer Material Science AG | BASF | Alfa / Schweiz |
| Feststoffgehalt (%) | 58 | 50 | 55 |
| pH Wert | 12 | 5,8 | 8,5 |

### 1.2 Messmethoden:

### 1.2.1. Bestimmung des Erweichungspunktes der Verklebung(Wärmefestigkeit)

Die Prüfung erfolgt gemäß EN 1392. Aus zwei Probestreifen aus KASX (Butadien-Acrylnitril-Rubber Gummi), gerauht mit Schleifpapier (Körnung = 40), werden Prüfkörper herausgeschnitten, Maße 20 x 60 mm. Ein 100 µm dicker Nassfilm der Klebstoffformulierung wird mit einem Pinsel auf einer zu verklebenden Fläche von 10 x 20 mm aufgetragen und 1 Stunde bei Raumtemperatur gelüftet. Anschließend werden die Prüfkörper 10 s schockaktiviert und so gegeneinander gepresst, dass nur die Klebflächen in einem Winkel von 180° gegeneinander gefügt werden. Der Verbund wird in der Presse 10 sec mit 4 bar (effektiv) gepresst.

Nach einer Lagerzeit von 3 - 7 tagen werden die KASX-Prufkörper mit 4 kg belastet und in einem Heizschrank innerhalb von 30 min. auf 40°C temperiert. Anschließend werden die Prüfkörper mit einer linearen Heizrate von 0,5°C/min. auf 150°C aufgeheizt. Die Erweichungstemperatur, d.h. die Temperatur in °C bei der die Klebung unter der 4 kg Last im Scherversuch versagt, wird registriert. Es werden jeweils 4 Einzelmessungen durchgeführt.

### Schockaktivierung

Die Klebeflächen werden 10 Sekunden mit einem IR-Strahler der Fa. Funk (Schockaktiviergerät 2000) bestrahlt. Die Verklebung erfolgt sofort nach Wärmeaktivierung der mit Klebstoff beschichteten Prüfkörper, indem die aktivierten Klebeschichten gegeneinander gelegt und in einer Presse verpresst werden. Die so hergestellten Prüfkörper werden bei 23°C und 50 % relativer Feuchte gelagert.

### 1.2.2. Bestimmung von Kontaktverklebung und Festigkeitsaufbau nach dem Sprühauftrag der Klebstoff Formulierung

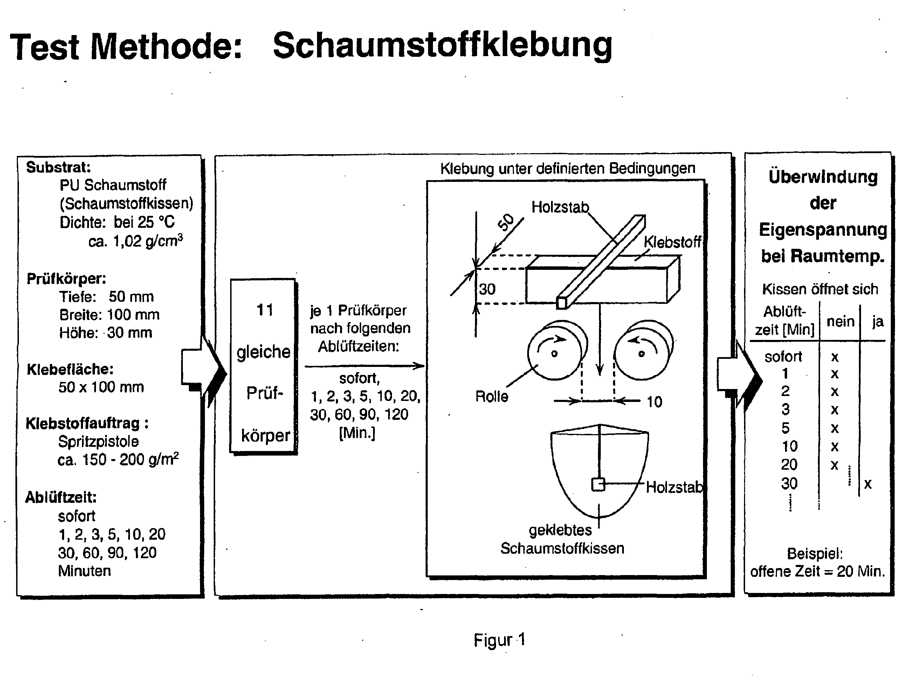

Die Klebstoff-Formulierungen werden mittels einer Spray-Mix Anlage der Firma Krautzberger, Eltville auf die Polyurethan Schaumstoffkörper aufgetragen. Die Details sind der technischen Information der Firma Bayer Material Science AG KA-KR-0001e/01/05.96 zu entnehmen. Die beschichteten Substrate werden nach 0-30 Minuten Trocknungszeit wie in Fig. 1 beschrieben verpresst und bestimmt, ob sich die Verklebung ganz oder teilweise öffnet bzw. ob die Verklebung hält.

### Abb. 1: Messmethode der Schaum-Schaum Verklebung

In einem weiteren Versuch erfolgt der Pressvorgang nach einer Trocknungszeit von 10 und 20 Minuten. Anschließend wird versucht die Klebenaht wieder zu öffnen. Es wird die Zeit in Minuten angegeben, nach der der Schaumstoff zerreißt, d.h. die Klebung fester ist als der Schaumstoffkörper.

### 13 Allgemeine Arbeitsvorschriften für die erfindungsgemäße Herstellung von Klebstoffformulierungen

### 1.3.1 Herstellung der angesäuerten Siliciumdioxid Dispersionen

Für die Herstellung der angesäuerten Siliziumdioxid-Dispersionen gemäß erfindungsgemäßem Verfahrensschritt (a) wurden die Siliciumdioxid-Dispersionen B, C oder D in einer verschließbaren Glasflasche vorgelegt und 85%ige ortho-Phosphorsäure zugetropft bis der pH-Wert der Siliciumdioxid-Dispersion bei einem pH-Wert von 2 bis 3 lag. Nach einer Rührzeit von 10 min wurde die Glasflasche verschlossen und gelagert.

### 1.3.2. Herstellung der Klebstoff-Formulierungen

Für die Herstellung der Klebstoffformulierungen wurde die Polychloropren-Dispersion in einem Becherglas vorgelegt. Nacheinander wurden dann die Zusatzstoffe bzw. Hilfsmittel, d.h. weiteren Formulierkomponenten, unter rühren zugesetzt und zum Schluss die Siliciumdioxid-Dispersion ebenfalls unter rühren zugesetzt. Nach einer Lagerzeit von 24 Stunden wurde die Klebstoffformulierung für die Versuche verwendet.

### 1.4. Beispiele:

### 1.4.1. Einstellung des pH-Wertes von Klebstoffformulierungen

**Tab 4a: Zusammensetzungen der Klebstoffformulierungen**

| | | | | | | | | | |
|---|---|---|---|---|---|---|---|---|---|
| Bei den angegebenen Zahlenwerten handelt es sich um Gewichtsteile der einzelnen Komponenten in den jeweiligen Klebstoffformulierungen. | | | | | | | | | |
| Die Klebstoffformulierungen wurden gemäß allgemeiner Arbeitsvorschrift unter 1.3.2. hergestellt. | | | | | | | | | |

| **Ansatz-Nr.** | **1*)** | **2*)** | **3*)** | **4*)** | **5*)** | **6*)** | **7*)** | **8*)** | **9** |
|---|---|---|---|---|---|---|---|---|---|
| Polychloropren Dispersion F | 100 | 100 | 100 | 100 | 100 | 100 | 100 | 100 | 100 |
| Kieselsol A | | | 30 | 30 | 30 | 30 | | | |
| Kieselsol D | | | | | | | | | 30 |
| Dermulsene® TR 602⁽³⁾ | 30 | 30 | | | | | | | |
| Acronal® A 310 S | | | | | | | | | 30 |
| Vulkanox® DDA 50EM⁽¹⁾ | 2 | 2 | 2 | 2 | | | | | 2 |
| Borchers LP0024⁽²⁾ | 0,5 | 0,5 | 0,5 | 0,5 | | | | | 0,5 |

| | | | | | | | | | |
|---|---|---|---|---|---|---|---|---|---|
| Bezugsquellen : ⁽¹⁾ Rhein Chemie GmbH, Mannheim, D (50% Diphenylamin-Derivat in wässriger Emulsion) ⁽²⁾ Borchers GmbH, Langenfeld, D (Alkylhydroxylamin, 85%ig in Wasser) ⁽³⁾ Fa. DRT (Les Derives Resiniques+Terpeniques, Cedex, Frankreich, (Terpen-phenolharz -Disp) | | | | | | | | | |

**Tab 4b: pH-Wert der Klebstoffformulierung vor und nach Säurezugabe,**

| | | | | | | | | | |
|---|---|---|---|---|---|---|---|---|---|
| Es wurde versucht, die pH-Werte der Klebstoffformulierungen 1 - 8 aus Tab. 4a durch Säurezugabe auf einen pH-Wert von 9 einzustellen. Hierzu wurden die folgenden Säuren verwendet: | | | | | | | | | |
| Essigsäure als schwache Säure mit einem pK_{A}-Wert von 4,75 | | | | | | | | | |
| Ortho-Phosphorsäure als mittelstarke Säure mit einem pK_{A}-Wert von 2,16 | | | | | | | | | |
| Die erfindungsgemäß hergestellte Klebstoffformulierung 9 wies bereits einen pH-Wert von 9 auf. | | | | | | | | | |

| **Ansatz - Nr.** | **1*)** | **2*)** | **3*)** | **4*)** | **5*)** | **6*)** | **7*)** | **8*)** | **9** |
|---|---|---|---|---|---|---|---|---|---|
| pH Wert Formulierung vor Säurezusatz | 10,7 | 10,7 | 10,4 | 10,4 | 10,6 | 10,6 | 12,0 | 12,0 | 9,0 |
| Zugabe von 10%iger Essigsäure | + | | + | | + | | + | | |
| Zugabe von 10%iger Phosphorsäure | | + | | + | | + | | + | |
| Bemerkung | K | K | K | K | K | K | K | K | - |

| | | | | | | | | | |
|---|---|---|---|---|---|---|---|---|---|
| *) Vergleichsbeispiel , + = Zugabe der Säure zur fertigen Klebstoffformulierung, K = Koagulation des Latex während der Zugabe von Säure | | | | | | | | | |

Wie In Tab. 4b ersichtlich ließ sich der pH-Wert der fertigen Klebstoffformulierungen 1 - 4, der Siliciumdioxid/Polychloropren-Mischungen 5 und 6 sowie der reinen Polychloropren-Dispersionen 7 und 8 weder durch die Zugabe der schwachen Säure Essigsäure noch durch Zugabe der mittelstarken Säure ortho-Phosphorsäure einstellen. In allen Fällen trat bei Säurezugabe Koagulation ein. Erst durch eine Vorabmischung von ortho-Phosphorsäure mit der Siliciumdioxid-Dispersion konnte ein pH-Wert der Klebstoffformulierung von 9 erreicht (vgl. Ansatz 9).

### 1.4.2. Ermittlung des Wärmestandes von Klebstoffformulierungen

**Tab 5a: Zusammensetzungen der Klebstoffformulierungen**

| | | | | | | | | |
|---|---|---|---|---|---|---|---|---|
| Bei den angegebenen Zahlenwerten handelt es sich um Gewichtsteile der einzelnen Komponenten in den jeweiligen Klebstoffformulierungen. | | | | | | | | |
| Die Klebstoffformulierungen wurden gemäß allgemeiner Arbeitsvorschrift unter 1.3.2. hergestellt. | | | | | | | | |

| **Ansatz - Nr.** | **10*)** | **11*)** | **12** | **13** | **14** | **15** | **16** | **17**)** |
|---|---|---|---|---|---|---|---|---|
| Polychloropren Dispersion F | 100 | 100 | 100 | 100 | 100 | 100 | 100 | Simalfa® 309 |
| Kieselsol D | | | | | 30 | 30 | 30 | |
| Kieselsol B | | | | 80 | | | | |
| Kieselsol C | | | 80 | | | | | |
| Dermulsene® TR 602⁽³⁾ | 30 | | | | | | | |
| Acronal® A 310 S | | 30 | | | | 30 | 30 | |
| Cyclodextrin E | | | | | | | 10 | |
| Vulkanox® DDA 50EM⁽¹⁾ | 2 | 2 | 2 | 2 | 2 | 2 | 2 | |
| Borchers LP0024⁽²⁾ | 0,5 | 0,5 | 0,5 | 0,5 | 0,5 | 0,5 | 0,5 | |
| Glycin | + | + | | | | | | |

| | | | | | | | | |
|---|---|---|---|---|---|---|---|---|
| *) Vergleichsbeispiele, **) Stand der Technik Ansatz 17 stellt ein weiteres Vergleichsbeispiel gemäß Stand der Technik dar, bei dem die Klebstoffformulierung aus Simalfa® 309 besteht. Bezugsquellen: ⁽¹⁾ Rhein Chemie GmbH, Mannheim, D (50% Diphenylamin-Derivat in wässriger Emulsion) ⁽²⁾ Borchers GmbH, Langenfeld, D (Alkylhydroxylamin, 85%ig in Wasser) ⁽³⁾ Fa. DRT (Les Derives Resiniques+Terpeniques, Cedex, Frankreich, (Terpen-phenolharz -Disp) | | | | | | | | |

**Tab 5b: pH-Wert und Feststoffgehalt der Klebstoffformulierungen**

| **Ansatz- Nr.** | **10*)** | **11*)** | **12** | **13** | **14** | **15** | **16** | **17**)** |
|---|---|---|---|---|---|---|---|---|
| pH-Wert der Formulierung | 9,3 | 9,3 | 9,3 | 9,5 | 9,2 | 9,2 | 9,2 | 8,8 |
| Feststoffgehalt in Gew.-% | 45 | 44 | 45 | 40 | 53 | 54 | 54 | 55 |

**Tab 5c: Wärmestand der Klebenaht**

| **Ansatz-Nr.** | **10*)** | **11*)** | **12** | **13** | **14** | **15** | **16** | **17**)** |
|---|---|---|---|---|---|---|---|---|
| Wärmestand in °C | 60 | 60 | 110 | 110 | 110 | 90 | 115 | 60 |

Gegenüber den Vergleichsbeispielen (Versuche 10, 11, 17) zeigen die erfindungsgemäß hergestellten Formulierungen einen deutlich höheren Wärmestand.

**Tab 5d: Kontaktklebezeit**

| **Trocknungszeit in min / Ansatz** | **10*)** | **11*)** | **12** | **13** | **14** | **15** | **16** | **17**)** |
|---|---|---|---|---|---|---|---|---|
| 0 | - | - | + | (+) | + | + | + | + |
| 1 | - | - | + | + | + | + | + | + |
| 3 | - | - | + | + | + | + | + | + |
| 5 | - | + | + | + | + | + | + | + |
| 10 | + | + | + | + | + | + | + | + |
| 15 | + | + | + | + | + | + | + | + |
| 20 | + | + | (+) | + | + | + | + | + |

| | | | | | | | | |
|---|---|---|---|---|---|---|---|---|
| Klebenaht ist bei: - wieder voll geöffnet, bei (+) leicht geöffnet und bei + geschlossen | | | | | | | | |

Gegenüber den Vergleichsbeispielen (Versuche 10, 11) zeigen die erfindungsgemäß hergestellten Formulierungen eine deutlich bessere Kontaktklebezeit insbesondere bei kürzeren Trocknungszeiten und sind damit in dieser Eigenschaft mit dem Stand der Technik vergleichbar.

**Tab 5e: Festigkeitsaufbau der Verklebung nach einer Trocknungszeit von 10 min**

| **Lagerzeit nach dem Verkleben in min / Ansatz** | **10*)** | **11*)** | **12** | **13** | **14** | **15** | **16** | **17**)** |
|---|---|---|---|---|---|---|---|---|
| 1 | - | - | - | - | - | - | - | - |
| 3 | - | - | - | - | - | - | (+) | - |
| 5 | - | - | (+) | - | - | (+) | (+) | (+) |
| 7 | - | - | (+) | (+) | (+) | (+) | + | (+) |
| 10 | - | (+) | + | (+) | (+) | + | + | + |
| 15 | (+) | (+) | + | + | + | + | + | + |
| 20 | (+) | + | + | + | + | + | + | + |

| | | | | | | | | |
|---|---|---|---|---|---|---|---|---|
| Verklebung lässt sich bei: - wieder trennen, zeigt bei (+) teilweise Materialausriß und bei + Materialausriss | | | | | | | | |

Gegenüber den Vergleichsbeispielen (Versuche 10, 11, 17) zeigen die Verklebungen mit dem erfindungsgemäß hergestellten Formulierungen erst nach längerer Lagerung Materialausriß.

## Patentansprüche

1. Verfahren zur Herstellung von Dispersionen, **dadurch gekennzeichnet, dass**
(a) mindestens eine wässrige Siliciumdioxid-Dispersion mit einem mittleren Partikeldurchmesser der SiO₂-Partikel von 1 bis 200 nm durch Zugabe von wenigstens einer starken oder mittelstarken Säure auf einen pff-Wen von 6 oder kleiner gebracht wird und '
(b) anschließend mit wenigstens einer Polychloropren-Dispersion mit einer mittleren Partikelgröße der Polychloroprenpartikel von 50 bis 200 nm gemischt wird.

2. Verfahren gemäß Anspruch 1, **dadurch gekennzeichnet, dass** die SiO₂-Partikel einen Partikeldurchmesser von 5 bis 100 nm, bevorzugt von 8 bis 60 nm aufweisen.

3. Verfahren gemäß Anspruch 1 oder 2, **dadurch gekennzeichnet, dass** die wässrige Siliciumdioxid-Dispersion ein Kieselsol ist.

4. Verfahren gemäß wenigstens einem der Ansprüche 1 bis 3, **dadurch gekennzeichnet, dass** die nach Verfahrensschritt (a) erhaltene Siliciumdioxid-Dispersion einen pH-Wert von 1 bis 5, bevorzugt von 1,7 bis 4 aufweist

5. Verfahren gemäß wenigstens einem der Ansprüche 1 bis 4, **dadurch gekennzeichnet, dass** die Dispersionen weiterhin
(c) wenigstens eine wasserlösliche OH-gnäppenhaltige organische Verbindung enthalten.

6. Verfahren gemäß Anspruch 5, **dadurch gekennzeichnet, dass** die OH-gruppenhaltige(n) Verbindungen ein oder mehrere Cyclodextrin(e) sind (ist).

7. Dispersionen erhältlich nach dem Verfahren gemäß wenigstens einem der Ansprüche 1 bis 6.

8. Verwendung der Dispersionen gemäß Anspruch 7 als Komponenten bei der Herstellung von Klebstoff- oder Beschichtungsformulierungen.

9. Verwendung der Dispersionen gemäß Anspruch 7 als Komponenten bei der Herstellung von Sprilhklebstoffformulierungen, bevorzugt 1K-Sprühklebstofformulierungen.

10. Klebstoff- oder Beschichtungsformulierung enthaltend wenigstens eine Dispersion gemäß Anspruch 7.

11. Substrate, **dadurch gekennzeichnet, dass** sie mit einer Dispersionen gemäß Anspruch 7 beschichtet oder verklebt sind.

## Claims

1. Process for the preparation of dispersions, **characterised in that**
(a) at least one aqueous silica dispersion with an average particle diameter of the SiO₂ particles of 1 to 200 nm is reduced to a pH value of 6 or less through the addition of at least one strong or medium-strong acid and
(b) next is mixed with at least one polychloroprene dispersion with an average particle size of the polychloroprene particles of 50 to 200 nm.

2. Process according to claim 1, **characterised in that** the SiO₂ particles have a particle diameter of 5 to 100 nm, preferably of 8 to 60 nm.

3. Process according to claim 1 or 2, **characterised in that** the aqueous silica dispersion is a silica sol.

4. Process according to at least one of claims 1 to 3, **characterised in that** the silica dispersion obtained according to process step (a) has a pH-value of 1 to 5, preferably of 1.7 to 4.

5. Process according to at least one of claims 1 to 4, **characterised in that** the dispersions further contain
(c) at least one water-soluble OH-groups-containing organic compound.

6. Process according to claim 5, **characterised in that** the OH-groups-containing compound(s) are one or several cyclodextrins.

7. Dispersions obtainable according to the process according to at least one of claims 1 to 6.

8. Use of the dispersions according to claim 7 as components in the preparation of adhesive or coating formulations.

9. Use of the dispersions according to claim 7 as components in the preparation of spray adhesive formulations, preferably 1K-spray adhesive formulations.

10. Adhesive or coating formulation containing at least one dispersion according to claim 7.

11. Substrates, **characterised in that** they are coated or glued with a dispersion according to claim 7.

## Revendications

1. Procédé de préparation de dispersions, **caractérisé en ce que**
(a) au moins une dispersion aqueuse de dioxyde de silicium avec un diamètre moyen de particule des particules de SiO₂ allant de 1 à 200 nm est portée à un pH de 6 ou moins par addition d'au moins un acide fort à moyennement fort et
(b) celle-ci est ensuite mélangée à au moins une dispersion de polychloroprène avec une taille moyenne de particule des particules de polychloroprène allant de 50 à 200 nm.

2. Procédé selon la revendication 1, **caractérisé en ce que** les particules de SiO₂ présentent un diamètre de particule allant de 5 à 100 nm, de préférence de 8 à 60 nm.

3. Procédé selon la revendication 1 ou 2, **caractérisé en ce que** la dispersion aqueuse de dioxyde de silicium est un sol d'acide silicique.

4. Procédé selon au moins une des revendications 1 à 3, **caractérisé en ce que** la dispersion de dioxyde de silicium obtenue après l'étape de procédé (a) présente un pH allant de 1 à 5, de préférence de 1,7 à 4.

5. Procédé selon au moins une des revendications 1 à 4, **caractérisé en ce que** en outre les dispersions
(c) comprennent au moins un composé organique hydrosoluble contenant des groupes OH.

6. Procédé selon la revendication 5, **caractérisé en ce que** le ou les composés contenant des groupes OH sont une ou plusieurs cyclodextrines.

7. Dispersions pouvant être obtenues d'après le procédé selon au moins une des revendications 1 à 6.

8. Utilisation des dispersions selon la revendication 7 comme composants pour la préparation de formulations de colle ou de revêtement.

9. Utilisation des dispersions selon la revendication 7 comme composants pour la préparation de formulations de colle à vaporiser, de préférence des formulations de colle à vaporiser 1 K.

10. Formulation de colle ou de revêtement comprenant au moins une dispersion selon la revendication 7.

11. Substrats **caractérisés en ce qu'**ils sont revêtus ou collés avec une dispersion selon la revendication 7.
